# EUROPEAN PATENT APPLICATION

(11) **EP 4 096 135 A1**
(43) Date of publication of application: **30.11.2022**
(21) Application number: 21744130.2
(22) Date of filing: 29.01.2021
(51) Int. Cl.: H04L 5/00, H04W 52/14, H04W 52/24

(54) **METHOD AND APPARATUS FOR DETERMINING PATH LOSS REFERENCE SIGNAL**

(30) Priority: 20.01.2020 CN 202010067308
(71) Applicant: Beijing Unisoc Communications Technology Co., Ltd, Beijing 100083 (CN)
(72) Inventor: WANG, Hualei, Beijing 100191 (CN)
(74) Representative: Mewburn Ellis LLP
(86) International application number: PCT/CN2021/074470
(87) International publication number: WO 2021/148041

(57) **Abstract**

The disclosure relates to a method and a device for determining a path-loss reference signal. The method includes: obtaining downlink control information (DCI) for scheduling a data channel; and determining a path-loss reference signal of the data channel according to a format of the DCI in combination with a type of a reference signal associated with the data channel or a transmission configuration indicator (TCI) state parameter of the data channel. According to the method and the device for determining a path-loss reference signal in various implementations of the disclosure, the path-loss reference signal still can be ensured to be determined normally, in a case that current methods for determining the path-loss reference signal are unable to be applied due to changes of the type of the reference signal associated with the data channel, or current parameters for determining the path-loss reference signal are replaced.

## Description

### TECHNICAL FIELD

The disclosure relates to the field of wireless communications, in particular to a method and a device for determining a path-loss reference signal.

### BACKGROUND

Path Loss (PL) is an amount of loss introduced by propagation environment between a transmitter and a receiver. In the field of communications, it is of great significance for determining the transmission power of a user equipment (UE) and other application processes to determine path loss on a data channel. Generally, the path loss of the data channel can be estimated based on a path-loss reference signal. Therefore, in the field of communications, it is of great significance to determine the path-loss reference signal of the data channel.

However, due to rapid development of communication technologies, related parameters for determining the path-loss reference signal may change, which may lead to inability to effectively determine the path-loss reference signal in a developed communication system according to current methods for determining the path-loss reference signal.

### SUMMARY

In view of this, a method and a device for determining a path-loss reference signal are provided in the present disclosure. A technical scheme is as follows.

According to a first aspect of the disclosure, a method for determining a path-loss reference signal is provided. The method includes: obtaining downlink control information (DCI) for scheduling a data channel; and determining a path-loss reference signal of the data channel according to a format of the DCI in combination with a type of a reference signal associated with the data channel or a transmission configuration indicator (TCI) state parameter of the data channel.

In a possible implementation, determining the path-loss reference signal of the data channel according to the format of the DCI includes: determining the path-loss reference signal of the data channel according to the type of the reference signal associated with the data channel in response to the format of the DCI including DCI 0_0; or determining the path-loss reference signal of the data channel according to the TCI state parameter of the data channel in response to the format of the DCI including DCI 0_1.

In a possible implementation, determining the path-loss reference signal of the data channel according to the type of the reference signal associated with the data channel in response to the format of the DCI including DCI 0_0 includes: determining a configuration state of a physical uplink control channel (PUCCH) resource of an associated bandwidth part (BWP) of the data channel, the associated BWP including an active BWP of a cell, a carrier, or a carrier group to which the data channel belongs; determining the path-loss reference signal of the data channel according to a type of a first reference signal associated with the data channel in response to the associated BWP being not configured with the PUCCH resource, where the first reference signal includes a QCL-TypeD reference signal contained in a TCI state corresponding to a first control resource set (CORESET), and the first CORESET includes a CORESET with a lowest ID configured on the associated BWP or a CORESET with a lowest ID configured on the associated BWP and associated with a search space monitored in a latest slot, in response to the associated BWP being not configured with the PUCCH resource; or determining the path-loss reference signal of the data channel according to the PUCCH resource in response to the associated BWP being configured with the PUCCH resource and the PUCCH resource being not configured with spatial information or a QCL-TypeD reference signal; or determining the path-loss reference signal of the data channel according to a type of a reference signal corresponding to spatial information or a type of a QCL-TypeD reference signal included in the PUCCH resource, in response to the associated BWP being configured with the PUCCH resource and at least one of the PUCCH resource being configured with the spatial information or the QCL-TypeD reference signal.

In a possible implementation, determining the path-loss reference signal of the data channel according to the type of the first reference signal associated with the data channel in response to the associated BWP being not configured with PUCCH resource includes: determining whether the type of the first reference signal is a downlink reference signal or a downlink channel to obtain a first determination result, in response to the associated BWP being not configured with the PUCCH resource; taking the first reference signal as the path-loss reference signal of the data channel in response to the first determination result being yes ; and taking a second reference signal as the path-loss reference signal of the data channel in response to the first determination result being no, where the second reference signal includes a path-loss reference signal corresponding to a first target parameter included in power control parameters of the data channel.

In a possible implementation, determining the path-loss reference signal of the data channel according to the PUCCH resource in response to the associated BWP being configured with the PUCCH resource and the PUCCH resource being not configured with the spatial information or the QCL-TypeD reference signal includes: determining whether the associated BWP is configured with a CORESET to obtain a second determination result, in response to the associated BWP being configured with the PUCCH resource and the PUCCH resource being not configured with the spatial information or the QCL-TypeD reference signal; determining the path-loss reference signal of the data channel according to a type of a third reference signal or a type of a fourth reference signal associated with the data channel in response to the second determination result being yes, where the third reference signal includes a QCL-TypeD reference signal contained in a TCI state corresponding to a second CORESET, and the second CORESET includes a CORESET with a lowest ID configured on the associated BWP or a CORESET with a lowest ID configured on the associated BWP and associated with a search space monitored in a latest slot, in response to the associated BWP being configured with the PUCCH resource, and the fourth reference signal includes a QCL-TypeD reference signal contained in an active TCI state with a lowest ID associated with the data channel; and determining the path-loss reference signal of the data channel according to the type of the fourth reference signal associated with the data channel in response to the second determination result being no.

In a possible implementation, determining the path-loss reference signal of the data channel according to the type of the third reference signal associated with the second CORESET or the type of the fourth reference signal associated with the data channel in response to the second determination result being yes includes: determining whether the type of the third reference signal is a downlink reference signal or a downlink channel to obtain a third determination result, in response to the second determination result being yes; taking the third reference signal as the path-loss reference signal of the data channel in response to the third determination result being yes; and taking the second reference signal as the path-loss reference signal of the data channel in response to the third determination result being no, or determining the path-loss reference signal of the data channel according to the type of the fourth reference signal in response to the third determination result being no.

In a possible implementation, determining the path-loss reference signal of the data channel according to the type of the fourth reference signal in response to the third determination result being no includes: determining the type of the fourth reference signal in response to the third determination result being no; taking the fourth reference signal as the path-loss reference signal of the data channel in response to the type of the fourth reference signal including a downlink reference signal or a downlink channel; and taking the second reference signal as the path-loss reference signal of the data channel in response to the type of the fourth reference signal including an uplink reference signal or an uplink channel.

In a possible implementation, determining the path-loss reference signal of the data channel according to the type of the fourth reference signal associated with the data channel in response to the second determination result being no includes: determining the type of the fourth reference signal in response to the second determination result being no; taking the fourth reference signal as the path-loss reference signal of the data channel in response to the type of the fourth reference signal including a downlink reference signal or a downlink channel; and taking the second reference signal as the path-loss reference signal of the data channel in response to the type of the fourth reference signal including an uplink reference signal or an uplink channel.

In a possible implementation, determining the path-loss reference signal of the data channel according to the type of the reference signal corresponding to the spatial information or the type of the QCL-TypeD reference signal included in the PUCCH resource in response to the associated BWP being configured with the PUCCH resource and at least one of the PUCCH resource being configured with the spatial information or the QCL-TypeD reference signal includes: selecting a PUCCH resource with a lowest ID from the PUCCH resource configured with the space information or the QCL-TypeD reference signal as a PUCCH resource to-be-determined, in response to the associated BWP being configured with the PUCCH resource and at least one of the PUCCH resource being configured with the spatial information or the QCL-TypeD reference signal; determining whether a type of a reference signal corresponding to spatial information or a type of a QCL-TypeD reference signal included in the PUCCH resource to-be-determined is a downlink reference signal or a downlink channel, to obtain a fourth determination result; taking the reference signal corresponding to the spatial information or the QCL-TypeD reference signal included in the PUCCH resource to-be-determined as the path-loss reference signal of the data channel, in response to the fourth determination result being yes; and taking the second reference signal as the path-loss reference signal of the data channel in response to the fourth determination result being no.

In a possible implementation, determining the path-loss reference signal of the data channel according to the TCI state parameter of the data channel in response to the format of the DCI including DCI 0_1 includes: obtaining a TCI state parameter contained in the DCI in response to the format of the DCI including DCI 0_1; and determining the path-loss reference signal of the data channel according to a power control parameter corresponding to the TCI state parameter or a type of a QCL-TypeD reference signal corresponding to the TCI state parameter.

In a possible implementation, determining the path-loss reference signal of the data channel according to the power control parameter corresponding to the TCI state parameter or the type of the QCL-TypeD reference signal corresponding to the TCI state parameter includes: taking a fifth reference signal as the path-loss reference signal of the data channel, where the fifth reference signal includes a path-loss reference signal corresponding to a second target parameter corresponding to the power control parameter after the power control parameter is associated according to a value of the TCI state parameter.

In a possible implementation, determining the path-loss reference signal of the data channel according to the power control parameter corresponding to the TCI state parameter or the type of the QCL-TypeD reference signal corresponding to the TCI state parameter includes: taking the fifth reference signal as the path-loss reference signal of the data channel, in response to the type of the QCL-TypeD reference signal corresponding to the TCI state parameter being a channel sounding reference signal (SRS), or taking the second reference signal as the path-loss reference signal of the data channel.

In a possible implementation, determining the path-loss reference signal of the data channel according to the power control parameter corresponding to the TCI state parameter or the type of the QCL-TypeD reference signal corresponding to the TCI state parameter includes: taking the QCL-TypeD reference signal corresponding to the TCI state parameter as the path-loss reference signal of the data channel in response to the type of the QCL-TypeD reference signal corresponding to the TCI state parameter being a downlink (DL) reference signal (RS).

In a possible implementation, determining the path-loss reference signal of the data channel according to the power control parameter corresponding to the TCI state parameter or the type of the QCL-TypeD reference signal corresponding to the TCI state parameter includes: determining whether a QCL-TypeD reference signal contained in a TCI state of a CORESET is a downlink reference signal to obtain a fifth determination result, in response to the type of QCL-TypeD reference signal corresponding to the TCI state parameter being the CORESET; taking the QCL-TypeD reference signal contained in the TCI state of the CORESET as the path-loss reference signal of the data channel, in response to the fifth determination result being yes; and taking the second reference signal or the fifth reference signal as the path-loss reference signal of the data channel in response to the fifth determination result being no.

In a possible implementation, determining the path-loss reference signal of the data channel according to the power control parameter corresponding to the TCI state parameter or the type of the QCL-TypeD reference signal corresponding to the TCI state parameter includes: determining whether a reference signal corresponding to spatial information of a PUCCH or a QCL-TypeD reference signal contained in a TCI state is a downlink reference signal to obtain a sixth determination result, in response to the type of the QCL-TypeD reference signal corresponding to the TCI state parameter being the PUCCH; taking the reference signal corresponding to the spatial information of the PUCCH or the QCL-TypeD reference signal contained in the TCI state as the path-loss reference signal of the data channel in response to the sixth determination result being yes; and taking the second reference signal or the fifth reference signal as the path-loss reference signal of the data channel in response to the sixth determination result being no.

According to a second aspect of the disclosure, a device for determining a path-loss reference signal is provided, the device includes an obtaining module and a determining module.

The obtaining module is configured to obtain downlink control information (DCI) for scheduling a data channel. The determining module is configured to determine a path-loss reference signal of the data channel according to a format of the DCI in combination with a type of a reference signal associated with the data channel or a transmission configuration indicator (TCI) state parameter of the data channel.

In a possible implementation, the determining module includes a first determining unit or a second determining unit.

The first determining unit is configured to determine the path-loss reference signal of the data channel according to the type of the reference signal associated with the data channel in response to the format of the DCI including DCI 0_0; or the second determining unit is configured to determine the path-loss reference signal of the data channel according to the TCI state parameter of the data channel in response to the format of the DCI including DCI 0_1.

In a possible implementation, the first determining unit is configured to: determine a configuration state of a physical uplink control channel (PUCCH) resource of an associated bandwidth part (BWP) of the data channel, the associated BWP including an active BWP of a cell, a carrier, or a carrier group to which the data channel belongs; determine the path-loss reference signal of the data channel according to a type of a first reference signal associated with the data channel in response to the associated BWP being not configured with the PUCCH resource, where the first reference signal includes a QCL-TypeD reference signal contained in a TCI state corresponding to a first control resource set (CORESET), and the first CORESET includes a CORESET with a lowest ID configured on the associated BWP or a CORESET with a lowest ID configured on the associated BWP and associated with a search space monitored in a latest slot, in response to the associated BWP being not configured with the PUCCH resource; or determine the path-loss reference signal of the data channel according to the PUCCH resource in response to the associated BWP being configured with the PUCCH resource and the PUCCH resource being not configured with spatial information or a QCL-TypeD reference signal; or determine the path-loss reference signal of the data channel according to a type of a reference signal corresponding to spatial information or a type of a QCL-TypeD reference signal included in the PUCCH resource, in response to the associated BWP being configured with the PUCCH resource and at least one of the PUCCH resource being configured with the spatial information or the QCL-TypeD reference signal.

In a possible implementation, the first determining unit is further configured to: determine whether the type of the first reference signal is a downlink reference signal or a downlink channel to obtain a first determination result, in response to the associated BWP being not configured with the PUCCH resource; take the first reference signal as the path-loss reference signal of the data channel in response to the first determination result being yes; and take a second reference signal as the path-loss reference signal of the data channel in response to the first determination result being no, where the second reference signal includes a path-loss reference signal corresponding to a first target parameter included in power control parameters of the data channel.

In a possible implementation, the first determining unit is further configured to: determine whether the associated BWP is configured with a CORESET to obtain a second determination result, in response to the associated BWP being configured with the PUCCH resource and the PUCCH resource being not configured with the spatial information or the QCL-TypeD reference signal; determine the path-loss reference signal of the data channel according to a type of a third reference signal or a type of a fourth reference signal associated with the data channel in response to the second determination result being yes, where the third reference signal includes a QCL-TypeD reference signal contained in a TCI state corresponding to a second CORESET, and the second CORESET includes a CORESET with a lowest ID configured on the associated BWP or a CORESET with a lowest ID configured on the associated BWP and associated with a search space monitored in a latest slot, in response to the associated BWP being configured with the PUCCH resource, and the fourth reference signal includes a QCL-TypeD reference signal contained in an active TCI state with a lowest ID associated with the data channel; and determine the path-loss reference signal of the data channel according to the type of the fourth reference signal associated with the data channel in response to the second determination result being no.

In a possible implementation, the first determining unit is further configured to: determine whether the type of third reference signal is a downlink reference signal or a downlink channel to obtain a third determination result, in response to the second determination result being yes; take the third reference signal as the path-loss reference signal of the data channel in response to the third determination result being yes; and take the second reference signal as the path-loss reference signal of the data channel in response to the third determination result being no, or determining the path-loss reference signal of the data channel according to the type of the fourth reference signal in response to the third determination result being no.

In a possible implementation, the first determining unit is further configured to: determine the type of the fourth reference signal in response to the third determination result being no; take the fourth reference signal as the path-loss reference signal of the data channel in response to the type of the fourth reference signal including a downlink reference signal or a downlink channel; and take the second reference signal as the path-loss reference signal of the data channel in response to the type of the fourth reference signal including an uplink reference signal or an uplink channel.

In a possible implementation, the first determining unit is further configured to: determine the type of the fourth reference signal in response to the second determination result being no; take the fourth reference signal as the path-loss reference signal of the data channel in response to the type of the fourth reference signal including a downlink reference signal or a downlink channel; and take the second reference signal as the path-loss reference signal of the data channel in response to the type of the fourth reference signal including an uplink reference signal or an uplink channel.

In a possible implementation, the first determining unit is further configured to: select a PUCCH resource with a lowest ID from the PUCCH resource configured with the space information or the QCL-TypeD reference signal as a PUCCH resource to-be-determined, in response to the associated BWP being configured with the PUCCH resource and at least one of the PUCCH resource being configured with the spatial information or the QCL-TypeD reference signal; determine whether a type of a reference signal corresponding to spatial information or a type of a QCL-TypeD reference signal included in the PUCCH resource to-be-determined is a downlink reference signal or a downlink channel, to obtain a fourth determination result; take the reference signal corresponding to the spatial information or the QCL-TypeD reference signal included in the PUCCH resource to-be-determined as the path-loss reference signal of the data channel, in response to the fourth determination result being yes; and take the second reference signal as the path-loss reference signal of the data channel in response to the fourth determination result being no.

In a possible implementation, the second determining unit is configured to: obtain a TCI state parameter contained in the DCI in response to the format of the DCI including DCI 0_1; and determine the path-loss reference signal of the data channel according to a power control parameter corresponding to the TCI state parameter or a type of a QCL-TypeD reference signal corresponding to the TCI state parameter.

In a possible implementation, the second determining unit is further configured to: take a fifth reference signal as the path-loss reference signal of the data channel, where the fifth reference signal includes a path-loss reference signal corresponding to a second target parameter corresponding to the power control parameter after the power control parameter is associated according to a value of the TCI state parameter.

In a possible implementation, the second determining unit is further configured to: take the fifth reference signal as the path-loss reference signal of the data channel, in response to the type of the QCL-TypeD reference signal corresponding to the TCI state parameter being a channel sounding reference signal (SRS), or take the second reference signal as the path-loss reference signal of the data channel.

In a possible implementation, the second determining unit is further configured to: take the QCL-TypeD reference signal corresponding to the TCI state parameter as the path-loss reference signal of the data channel in response to the type of the QCL-TypeD reference signal corresponding to the TCI state parameter being a downlink (DL) reference signal (RS).

In a possible implementation, the second determining unit is further configured to: determine whether a QCL-TypeD reference signal contained in a TCI state of a CORESET is a downlink reference signal to obtain a fifth determination result, in response to the type of QCL-TypeD reference signal corresponding to the TCI state parameter being the CORESET; take the QCL-TypeD reference signal contained in the TCI state of the CORESET as the path-loss reference signal of the data channel, in response to the fifth determination result being yes; and take the second reference signal or the fifth reference signal as the path-loss reference signal of the data channel in response to the fifth determination result being no.

In a possible implementation, the second determining unit is further configured to: determine whether a reference signal corresponding to spatial information of a PUCCH or a QCL-TypeD reference signal contained in a TCI state is a downlink reference signal to obtain a sixth determination result, in response to the type of the QCL-TypeD reference signal corresponding to the TCI state parameter being the PUCCH; take the reference signal corresponding to the spatial information of the PUCCH or the QCL-TypeD reference signal contained in the TCI state as the path-loss reference signal of the data channel in response to the sixth determination result being yes; and take the second reference signal or the fifth reference signal as the path-loss reference signal of the data channel in response to the sixth determination result being no.

According to a third aspect of the disclosure, a device for determining a path-loss reference signal is provided, the device includes a processor configured to implement the method in the first aspect; and a memory configured to store instructions executable by the processor.

According to a fourth aspect of the disclosure, a non-transitory computer-readable storage medium is provided. The non-transitory computer-readable storage medium is configured to store computer program instructions which, when executed by a processor, are operable with the processor to implement the method in the first aspect.

By obtaining downlink control information (DCI) for scheduling a data channel and determining a path-loss reference signal of the data channel according to a format of the DCI in combination with a type of a reference signal associated with the data channel or a transmission configuration indicator (TCI) state parameter of the data channel, the path-loss reference signal still can be ensured to be determined normally with the method and the device for determining the path-loss reference signals according to implementations of various aspects of the present disclosure, in a case that current methods for determining the path-loss reference signal are unable to be applied due to changes of the type of the reference signal associated with the data channel, or current parameters for determining the path-loss reference signal are replaced.

Other features and aspects of the disclosure will become apparent from the following elaboration of exemplary implementations with reference to the accompanying drawings.

### BRIEF DESCRIPTION OF THE DRAWINGS

The accompanying drawings that are included in and constitute a part of the description, together with the description, illustrate exemplary implementations, features, and aspects of the disclosure, and are intended for explaining the principles of the disclosure.
FIG. 1 is a flowchart of a method for determining a path-loss reference signal according to an implementation of the present disclosure.
FIG. 2 is a block diagram of a device for determining a path-loss reference signal according to an implementation of the present disclosure.
FIG. 3 is a block diagram of a device for determining a path-loss reference signal according to an implementation of the present disclosure.

### DETAILED DESCRIPTION

Various exemplary implementations, features, and aspects of the disclosure will be described in detail below with reference to the accompanying drawings. The same reference numerals in the drawings represent elements with the same or similar functions. Although various aspects of the implementations are illustrated in the drawings, it is not necessary to draw the drawings to scale unless specifically noted.

The term "exemplary" herein means "as an example, implementation, or illustrative". Any implementation described herein as "exemplary" need not be interpreted as superior to or better than other implementations.

Terms such as "first", "second", "third", and the like in the specification and claims of this disclosure and the above drawings are used to distinguish similar objects, and are not necessarily used to describe a specific order or sequence. In addition, terms "including" and "having" and any variations thereof are intended to cover non-exclusive inclusion, for example, including a series of steps or units. Methods, systems, products, or devices are not necessarily limited to those steps or units explicitly listed, but may include other steps or units not explicitly listed or inherent to these processes, methods, products or devices. An expression "and/or" is intended to indicate that one or both of two connected objects are selected. For example, "A and/or B" means A, B, or A+B.

In addition, in order to better illustrate the disclosure, many specific details are given in the following specific implementations. Those skilled in the art should understand that the disclosure can still be implemented without some specific details. In some examples, methods, means, elements, and circuits well-known to those skilled in the art are not described in detail in order to highlight the subject matter of the disclosure.

In the field of communications, it is of great significance to determine a Path-Loss Reference Signal (PL RS) of a data channel. For a terminal device in a connected state, such as a UE, a physical uplink shared channel (PUSCH) associated with the terminal device can be scheduled by downlink control information (DCI). With different formats of DCI, determination of the path-loss reference signal of the PUSCH may vary flexibly.

In the related art, when a format of DCI is DCI 0_0, the path-loss reference signal of the PUSCH can be flexibly determined according to a QCL-TypeD reference signal included in a transmission configuration indicator (TCI) state associated with the PUSCH; and when the format of the DCI is DCI 0_1, the path-loss reference signal of the PUSCH can be flexibly determined according to a value of a channel sounding reference signal (SRS) resource indicator (SRI) field contained in the DCI.

In the related art, the QCL-TypeD reference signal contained in the TCI state associated with the PUSCH is currently a downlink reference signal. However, with development of communication technologies, the QCL-TypeD reference signal contained in the TCI state may be either the downlink reference signal or an uplink reference signal or an uplink channel. In response to the QCL-TypeD reference signal being the uplink reference signal or the uplink channel, the QCL-TypeD reference signal is unable to be taken as the path-loss reference signal of the PUSCH, that is, the path-loss reference signal of the PUSCH is unable to be determined by current methods. Similarly, with development of the communication technologies, the SRI field contained in the DCI may be replaced by other fields, and when the SRI field is replaced, the path-loss reference signal of the PUSCH is also unable to be determined by the current methods.

To solve above problems, an application example of a method for determining the path-loss reference signal is disclosed in implementations. In the application example of this disclosure, in order to alleviate a problem that the current methods for determining the path-loss reference signal is not applicable due to development of communication technologies, in one example, when the format of the DCI is DCI 0_0 and the QCL-TypeD reference signal contained in the TCI state associated with the PUSCH is the uplink reference signal, a path-loss reference signal corresponding to some target parameters included in power control parameters of the PUSCH, for example a path-loss reference signal corresponding to PUSCH-pathlossreferences-id contained in SRI-PUSCH-PowerControl associated with sri-PUSCH-PowerControlId=0 or a path-loss reference signal corresponding to PUSCH-PathlossReferenceRS-Id=0 is taken as the path-loss reference signal of the PUSCH. In an example, when the format of the DCI is DCI 0_1, the path-loss reference signal of the PUSCH can be flexibly determined according to the value of a TCI field in the DCI. For example, association can be established with the power control parameters of the PUSCH according to the value of the TCI field in the DCI, and then the path-loss reference signal corresponding to some target parameters in the associated power control parameters, such as a path-loss reference signal corresponding to PUSCH-PathlossReferenceRS-Id, can be taken as the path-loss reference signal of the PUSCH.

With the above, the path-loss reference signal still can be endured to be normally determined when current methods for determining the path-loss reference signal are not capable of being applied, due to changes of the type of the reference signal associated with the PUSCH, or the current parameters for determining the path-loss reference signal being replaced.

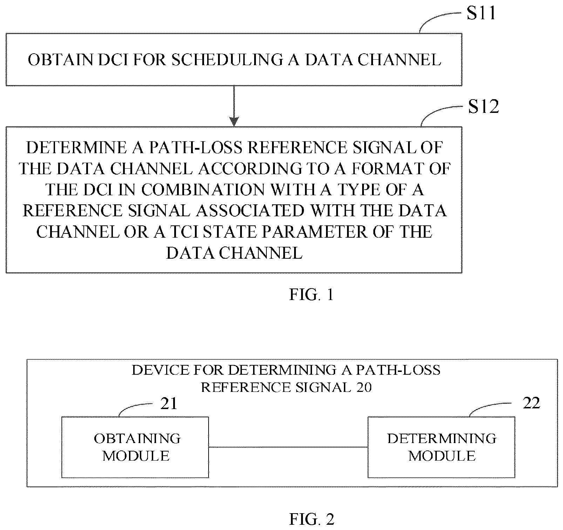

FIG. 1 is a flowchart of a codebook determination method according to an implementation of the present disclosure, which can be applied to a User Equipment (UE). The UE can be a mobile phone, a tablet computer, a notebook computer, a palm computer, a mobile Internet device (MID), a wearable device, a virtual reality (VR) device, an augmented reality (AR) device, a wireless terminal in industrial control, a wireless terminal in unmanned driving, a wireless terminal in remote surgery, a wireless terminal in a smart grid, a wireless terminal in transportation security, a wireless terminal in smart cities, a wireless terminal in smart homes, a wireless terminal in car networking, etc., which is not specifically limited in this implementation. As illustrated in FIG. 1, in a possible implementation, the method may include the following.

At block S11, obtain downlink control information (DCI) for scheduling a data channel.

At block S12, determine a path-loss reference signal of the data channel according to a format of the DCI in combination with a type of a reference signal associated with the data channel or a transmission configuration indicator (TCI) state parameter of the data channel.

In a possible implementation, the data channel scheduled by DCI may be a PUSCH. By obtaining the DCI for scheduling the data channel and determining the path-loss reference signal of the data channel according to the format of the DCI in combination with the type of the reference signal associated with the data channel or the TCI state parameter of the data channel, the path-loss reference signal still can be endured to be normally determined with the method and device for determining the path-loss reference signals according to implementations of various aspects of the present disclosure, in a case that current methods for determining the path-loss reference signal are unable to be applied due to changes of the type of the reference signal associated with the data channel, or current parameters for determining the path-loss reference signal being replaced.

In above disclosed implementations, it has been proposed that the method for determining the path-loss reference signal of the data channel may vary with different DCI formats, so in a possible implementation, operations at S12 may include the followings.

At block S121, determine the path-loss reference signal of the data channel according to the type of the reference signal associated with the data channel in response to the format of the DCI including DCI 0_0.

Or, at block S122, determine the path-loss reference signal of the data channel according to the TCI state parameter of the data channel in response to the format of the DCI including DCI 0_1.

It can be seen from the above disclosed implementations that for the current methods for determining the path-loss reference signal, it is difficult to directly use the reference signal as the path-loss reference signal of the data channel when the DCI format is DCI 0_0 and the reference signal associated with the data channel is not the downlink reference signal; and it is difficult to determine the path-loss reference signal of the data channel when the SRI field included in DCI is replaced, in response to the format of the DCI being DCI 0_1. Therefore, with the method proposed by the implementation of the present disclosure, when the format of the DCI is DCI 0_0, a determination manner of the path-loss reference signal can flexibly vary according to the changes of the type of the reference signal associated with the data channel; and when the format of DCI is DCI 0_1, the path-loss reference signal is determined according to the TCI state parameter of the data channel. Therefore, the path-loss reference signal can be ensured to be determined normally as much as possible.

It should be noted that DCI 0_0 and DCI0_1 mentioned in this disclosure are corresponding parameters for scheduling the PUSCH in a possible implementation. When a name of a parameter for scheduling the PUSCH varies, the name of the parameter for scheduling the PUSCH can also be flexibly selected according to an actual situation, and the condition for determining the path-loss reference signal of the data channel in the above-mentioned implementations is correspondingly modified, which is not limited in following implementations.

Specifically, in response to the format of the DCI being DCI 0_0, an implementation for determining the path-loss reference signal according to the type of the reference signal associated with the data channel can be flexibly determined according to the actual situation. In a possible implementation, operations at S 121 can include the following.

At block S1211, determine a configuration state of a physical uplink control channel (PUCCH) resource of an associated bandwidth part (BWP) of the data channel. The associated BWP includes an active BWP of a cell, a carrier, or a carrier group to which the data channel belongs.

At block S 1212, determine the path-loss reference signal of the data channel according to a type of a first reference signal associated with the data channel in response to the associated BWP being not configured with the PUCCH resource. The first reference signal includes a QCL-TypeD reference signal contained in a TCI state corresponding to a first control resource set (CORESET), and the first CORESET includes a CORESET with a lowest ID configured on the associated BWP or a CORESET with a lowest ID configured on the associated BWP and associated with a search space monitored in a latest slot, in response to the associated BWP being not configured with the PUCCH resource.

Or, at block S1213, determine the path-loss reference signal of the data channel according to the PUCCH resource in response to the associated BWP being configured with the PUCCH resource and the PUCCH resource being not configured with spatial information or a QCL-TypeD reference signal.

Or, at block S1214, determine the path-loss reference signal of the data channel according to a type of a reference signal corresponding to spatial information or a type of a QCL-TypeD reference signal included in the PUCCH resource, in response to the associated BWP being configured with the PUCCH resource and at least one of the PUCCH resource being configured with the spatial information or the QCL-TypeD reference signal.

The associated BWP of the data channel can be an active BWP of the cell where the data channel is located, or an active BWP of the carrier where the data channel is located, or an active BWP of a carrier group where the data channel is located. Because the associated BWP may be configured with the PUCCH resource, or without the PUCCH resource, with different configurations of the PUCCH resource on the associated BWP, the path-loss reference signal can be flexibly determined according to operations at S1212, S1213 and S 1214, such that the determination process of the path-loss reference signal can be guaranteed to be realized normally as much as possible no matter how the resource is configured on the associated BWP.

Specifically, it can be seen from block S1212 that the path-loss reference signal can be flexibly determined according to the type of the first reference signal in response to the associated BWP being not configured with the PUCCH resource. The first reference signal is unable to be obtained from the PUCCH resource because the associated BWP is not configured with the PUCCH resource. Therefore, in a possible implementation, in response to the associated BWP being not configured with the PUCCH resource, a CORESET with a lowest ID is selected from CORESETs configured on the associated BWP as a first CORESET, and a QCL-TypeD reference signal contained in a TCI state corresponding to the first CORESET is taken as the first reference signal.

In a possible implementation, in response to the associated BWP being not configured with the PUCCH resource, a CORESET with a lowest ID in CORESETs associated with a search space monitored in a latest slot (e.g., the CORESET associated with a monitored search space with the lowest CORESET-ID in the latest slot in which one or more CORESETs within the active BWP of the serving cell (s) are monitored by the UE) is selected as the first CORESET, and a QCL-TypeD reference signal contained in a TCI state corresponding to this first CORESET is taken as the first reference signal.

In a possible implementation, the latest time slot can be a time slot which is closest to a receiving time slot of a current data channel and in which the monitored search space is associated with the CORESETs. For example, if a time slot for receiving a current data channel PUSCH can be noted as a time slot N, then at or before the time slot N, if a search space monitored in a N-1 time slot is associated with a CORESET, the N-1 time slot can be regarded as the latest time slot, and if the monitored PDCCH is not needed in the N-1 time slot, whether a search space monitored in a N-2 time slot is associated with the CORESET is determined, and so on; and thus the latest time slot can be determined.

For example, in an example, three CORESETs can be configured on the associated BWP with IDs of these three CORESETs being 3, 4, and 5, respectively, where a CORESET with an ID of 4 is associated with the search space monitored in the latest time slot, then the CORESET with the lowest ID, that is, a CORESET with an ID of 3, can be taken as the first CORESET according to the above disclosed implementation, and the CORESET with the ID of 4 can also be taken as the first CORESET. When the CORESET with the ID of 3 is taken as the first CORESET, the first reference signal is a QCL-TypeD reference signal contained in a TCI state corresponding to the CORESET with the ID of 3, and when the CORESET with the ID of 4 is taken as the first CORESET, the first reference signal is a QCL-TypeD reference signal contained in a TCI state corresponding to the CORESET with the ID of 4.

With different types of the first reference signal, a way of determining the path-loss reference signal can also vary. In a possible implementation, operations at S1212 may include the following.

At block S12121, determine whether the type of the first reference signal is a downlink reference signal or a downlink channel to obtain a first determination result, in response to the associated BWP being not configured with the PUCCH resource.

At block S12122, take the first reference signal as the path-loss reference signal of the data channel in response to the first determination result being yes.

At block S 12123, take a second reference signal as the path-loss reference signal of the data channel in response to the first determination result being no. The second reference signal includes a path-loss reference signal corresponding to a first target parameter included in power control parameters of the data channel.

It can be seen from the above disclosed implementations that, in a possible implementation, in response to the first reference signal being a downlink reference signal or a downlink channel, the first reference signal can be directly taken as the path-loss reference signal of the data channel. In an example, the path-loss reference signal at this time can be a periodic reference signal.

However, in response to the first reference signal being not the downlink reference signal or the downlink channel, for example in response to the first reference signal being an uplink reference signal, determining the path-loss reference signal as the first reference signal will not meet communication requirements. Therefore, the second reference signal can be selected as the path-loss reference signal according to the power control parameters of the data channel. In a possible implementation, the second reference signal may be the path-loss reference signal corresponding to the first target parameter included in the power control parameters of the data channel, and specifically, the type of the first target parameter may be flexibly determined according to the actual situation. In a possible implementation, the first target parameter may be a parameter PUSCH-PathlossReferenceRS-Id included in SRI-PUSCH-PowerControl associated with a power control parameter sri-PUSCH-PowerControlId=0. In a possible implementation, the first target parameter may also be PUSCH-PathlossReferenceRS-Id=0, which can be flexibly selected according to the actual situation.

In a possible implementation, in response to the first determination result being no, that is, in response to the first reference signal being not the downlink reference signal or the downlink channel, the loss reference signal of the data channel can be determined according to a type of a fourth reference signal associated with the data channel, in addition to the second reference signal being taken as the loss reference signal. The fourth reference signal is a reference signal associated with the data channel, and its specific implementation can refer to subsequent disclosed implementations, which will not be expanded here.

In a possible implementation, determining the path-loss reference signal of the data channel according to the type of the fourth reference signal in response to the first determination result being no can be as follows.

Taking the fourth reference signal as the path-loss reference signal of the data channel in response to the type of the fourth reference signal including the downlink reference signal or the downlink channel. Or, taking the second reference signal as the path-loss reference signal of the data channel in response to the type of the fourth reference signal including an uplink reference signal or an uplink channel.

With the above, the path-loss reference signal can be flexibly obtained from the power control parameters of the data channel or from reference signals associated with the data channel in response to the first reference signal being unable to be directly taken as the path-loss reference signal, thus ensuring determination of the path-loss reference signal can be realized normally.

Likewise, as can be seen from block S1213 that, in response to the associated BWP being configured with PUCCH resources but no PUCCH resources being configured with spatial information or QCL-TypeD reference signals, a reference signal corresponding to the spatial information or the QCL-TypeD reference signal is unable to be directly obtained from the PUCCH resources as the path-loss reference signal because no spatial information or QCL-TypeD reference signals are configured in the PUCCH resources, and thus the path-loss reference signal of the data channel can be flexibly determined according to the PUCCH resources at this time.

Specifically, an implementation of determining the path-loss reference signal of the data channel according to the PUCCH resource can also be flexibly determined according to a type of an associated path-loss reference signal in the PUCCH resource. In a possible implementation, operations at S1213 may include the following.

At block S 12131, determine whether the associated BWP is configured with a CORESET to obtain a second determination result, in response to the associated BWP being configured with the PUCCH resource and the PUCCH resource being not configured with the spatial information or the QCL-TypeD reference signal.

At block S12132, determine the path-loss reference signal of the data channel according to a type of a third reference signal or a type of a fourth reference signal associated with the data channel in response to the second determination result being yes. The third reference signal includes a QCL-TypeD reference signal contained in a TCI state corresponding to a second CORESET, and the second CORESET includes a CORESET with a lowest ID configured on the associated BWP or a CORESET with a lowest ID configured on the associated BWP and associated with a search space monitored in a latest slot, in response to the associated BWP being configured with the PUCCH resource, and the fourth reference signal includes a QCL-TypeD reference signal contained in an active TCI state with a lowest ID associated with the data channel.

In S12133, determine the path-loss reference signal of the data channel according to the type of the fourth reference signal associated with the data channel in response to the second determination result being no.

It can be seen from the above disclosed implementations that, in response to the associated BWP being configured with PUCCH resources and each of the PUCCH resources being not configured with the spatial information or the QCL-TypeD reference signal, whether the associated BWP is configured with the CORESET can be determined firstly, and then a corresponding way can be selected flexibly to determine the path-loss reference signal of the data channel according to the different configurations of the CORESET on the associated BWP.

Expressions "second" and "first" in the second CORESET and the first CORESET are only used to distinguish the CORESET with the lowest ID configured on the associated BWP and the CORESET with the lowest ID associated with the search space monitored in the latest time slot under different configuration states of the PUCCH resource, but not to limit implementations of the two CORESETs, that is, specific configurations of the first CORESET and the second CORESET can be the same or different, which is not limited in this implementation.

In response to the associated BWP being configured with the CORESET, the path-loss reference signal of the data channel can be determined according to the third reference signal or the fourth reference signal. The third reference signal can be determined as follows. A CORESET with the lowest ID or a CORESET with the lowest ID associated with the search space monitored in the latest time slot is selected from the CORESETs configured on the associated BWP, a QCL-TypeD reference signal contained in a TCI state corresponding to this second CORESET is taken as the third reference signal. The fourth reference signal can be determined as follows. An active TCI state with the lowest ID is selected from active TCI states associated with the data channel, and a QCL-TypeD reference signal included in this selected active TCI state is taken as the fourth reference signal.

Specifically, a process of determining the path-loss reference signal of the data channel according to a state of the third reference signal or the fourth reference signal in response to the associated BWP being configured with the CORESETs can be flexibly determined according to the actual situation. In a possible implementation, operations at S12132 can include the following.

At block S121321, determine whether the type of the third reference signal is a downlink reference signal or a downlink channel to obtain a third determination result, in response to the second determination result being yes.

At block S121322, take the third reference signal as the path-loss reference signal of the data channel in response to the third determination result being yes.

At block S121323, take the second reference signal as the path-loss reference signal of the data channel in response to the third determination result being no. Or,

At block S121324, take the path-loss reference signal of the data channel according to the type of the fourth reference signal in response to the third determination result being no.

It can be seen from the above disclosed implementation that in response to the second determination result being yes, the path-loss reference signal of the data channel can be determined according to the type of the third reference signal, that is, if the third reference signal is the downlink reference signal or the downlink channel, the third reference signal can be directly taken as the path-loss reference signal of the data channel, and if the third reference signal is not the downlink reference signal or the downlink channel, such as is an uplink reference signal, the second reference signal proposed in the above disclosed implementation can be taken as the path-loss reference signal of the data channel in a possible implementation; and in a possible implementation, instead of taking the second reference signal as the path-loss reference signal, the path-loss reference signal of the data channel may be determined according to the type of the fourth reference signal.

Specifically, an implementation of determining the path-loss reference signal of the data channel according to the type of the fourth reference signal in response to the third determination result being no can be flexibly determined according to the actual situation. In a possible implementation, operations at S121324 can include the following.

At block S1213241, determine the type of the fourth reference signal in response to the third determination result being no.

At block S 1213242, take the fourth reference signal as the path-loss reference signal of the data channel in response to the type of the fourth reference signal including the downlink reference signal or the downlink channel.

At block S1213243, take the second reference signal as the path-loss reference signal of the data channel in response to the type of the fourth reference signal including an uplink reference signal or an uplink channel.

It can be seen from the above disclosed implementations that in response to the associated BWP being configured with the PUCCH resources and each of the PUCCH resources being not configured with the spatial information or QCL-TypeD reference signal, but the associated BWP being configured with the CORESETs, the path-loss reference signal of the data channel can be determined according to the type of the third reference signal or the fourth reference signal as follows.

In response to the third reference signal being a downlink reference signal or a downlink channel, the third reference signal can be directly taken as the path-loss reference signal of the data channel. In an example, the path-loss reference signal at this time can be a periodic reference signal.

Or, the second reference signal is taken as the path-loss reference signal of the data channel in response to the third reference signal being not the downlink reference signal or the downlink channel.

Or, in response to the third reference signal being not the downlink reference signal or the downlink channel and the fourth reference signal being the downlink reference signal or the downlink channel, the fourth reference signal can be directly taken as the path-loss reference signal of the data channel. In an example, the path-loss reference signal at this time can be a periodic reference signal.

Or, in response to the third reference signal being not the downlink reference signal or the downlink channel and the fourth reference signal being the uplink reference signal or the uplink channel, the second reference signal mentioned in the above disclosed implementation is taken as the path-loss reference signal of the data channel.

In response to the associated BWP being configured with the PUCCH resources and each of the PUCCH resources being not configured with the spatial information or QCL-TypeD reference signal, but the associated BWP being configured with the CORESETs, the path-loss reference signal of the data channel can be flexibly determined according to the type of the third reference signal or the fourth reference signal, which can improve flexibility of the path-loss reference signal determination process and further ensure complete realization of the path-loss reference signal determination process.

It can be seen from block S12133 that the path-loss reference signal of the data channel can be flexibly determined according to the type of the fourth reference signal in response to the associated BWP being not configured with the CORESETs. In a possible implementation, operations at S12133 may include the following.

At block S121331, determine the type of the fourth reference signal in response to the second determination result being no.

At block S121332, take the fourth reference signal as the path-loss reference signal of the data channel in response to the type of the fourth reference signal including the downlink reference signal or the downlink channel.

At block S121333, take the second reference signal as the path-loss reference signal of the data channel in response to the type of the fourth reference signal including an uplink reference signal or an uplink channel.

When the associated BWP is configured with the PUCCH resources, each of the PUCCH resources is not configured with the spatial information or QCL-TypeD reference signal, and the associated BWP is not configured with a CORESET, in response to the fourth reference signal being the downlink reference signal or the downlink channel, the fourth reference signal is directly taken as the path-loss reference signal of the data channel. In one example, the path-loss reference signal at this time may be a periodic reference signal. Or, in response to the fourth reference signal being the uplink reference signal or the uplink channel, the second reference signal mentioned in the above disclosed implementation is taken as the path-loss reference signal of the data channel.

Likewise, it can be seen from block S1214 that the path-loss reference signal of the data channel is determined according to the type of the reference signal corresponding to spatial information or the type of the QCL-TypeD reference signal included in the PUCCH resource, in response to the associated BWP being configured with the PUCCH resource and at least one of the PUCCH resource being configured with the spatial information or the QCL-TypeD reference signal. In a possible implementation, operations at S1214 may include the following.

At block S12141, select a PUCCH resource with a lowest ID from the PUCCH resource configured with the space information or the QCL-TypeD reference signal as a PUCCH resource to-be-determined, in response to the associated BWP being configured with the PUCCH resource and at least one of the PUCCH resource being configured with the spatial information or the QCL-TypeD reference signal.

At block S12142, determine whether a type of a reference signal corresponding to spatial information or a type of a QCL-TypeD reference signal included in the PUCCH resource to-be-determined is a downlink reference signal or a downlink channel to obtain a fourth determination result.

At block S 12143, take the reference signal corresponding to the spatial information or the QCL-TypeD reference signal included in the PUCCH resource to-be-determined as the path-loss reference signal of the data channel, in response to the fourth determination result being yes.

At block S12144, take the second reference signal as the path-loss reference signal of the data channel in response to the fourth determination result being no.

With at least one of the PUCCH resource configured on the associated BWP being configured with the spatial information or QCL-TypeD reference signal, there may be a plurality of PUCCH resources configured with the spatial information or the QCL-TypeD reference signal. At this time, a PUCCH resource with a lowest ID can be selected from these PUCCH resources configured with the spatial information or the QCL-TypeD reference signal as a PUCCH resource to-be-determined, so that in response to the reference signal corresponding to the spatial information or the QCL-TypeD reference signal included in the PUCCH resource to-be-determined being the downlink reference signal or channel, the reference signal corresponding to the spatial information or the QCL-TypeD reference signal can be taken as the path-loss reference signal of the data channel; otherwise, the second reference signal mentioned in the above-mentioned implementation can be taken as the path-loss reference signal.

It should be noted that, in response to the format of the DCI being DCI 0_0, various determination manners for the path-loss reference signal realized under different determination conditions mentioned in the above-mentioned implementation can be flexibly combined according to the actual situation, which is not limited in this implementation.

The above disclosed implementations describe how to determine the path-loss reference signal of the data channel according to the type of the reference signal associated with the data channel in response to the format of the DCI being DCI 0_0. It can be seen from operations at block S122 that in response to the format of the DCI being DCI 0_1, specific determination of the path-loss reference signal of the data channel according to the TCI state parameters of the data channel can be flexibly determined according to the actual situation. In a possible implementation, operations at S122 can include the following.

At block S1221, obtain a TCI state parameter contained in the DCI in response to the format of the DCI including DCI 0_1.

At block S 1222, determine the path-loss reference signal of the data channel according to a power control parameter corresponding to the TCI state parameter or a type of a QCL-TypeD reference signal corresponding to the TCI state parameter.

In the implementation disclosed above, after obtaining the TCI state parameter included in the DCI, the QCL-TypeD reference signal corresponding to the TCI state parameter may be the QCL-TypeD reference signal contained in the TCI state corresponding to the TCI state parameter. With the path-loss reference signal of the data channel being determined according to the power control parameter corresponding to the TCI state parameter or the type of the QCL-TypeD reference signal corresponding to the TCI state parameter in response to the format of DCI being DCI 0_1, the path-loss reference signal of the data channel can be also determined according to the DCI, thus ensuring the path-loss reference signal can be determined successfully, even if the SRI field in the DCI is replaced. It should be noted that the TCI state parameter mentioned in the above implementations can be an associated parameter or an associated field used to indicate the TCI state in the DCI, which can be flexibly determined according to information actually included in the DCI. In an example, the TCI state parameter can be a TCI field included in the DCI.

As a value of the TCI state parameter varies, a type of a corresponding QCL-TypeD reference signal may also vary. Therefore, an implementation of determining the path-loss reference signal of the data channel according to the TCI state parameter can be flexibly determined according to the actual situation. In a possible implementation, operations at S1222 may include the following.

Take a fifth reference signal as the path-loss reference signal of the data channel. The fifth reference signal includes a path-loss reference signal corresponding to a second target parameter corresponding to the power control parameter after the power control parameter is associated according to the value of the TCI state parameter.

It can be seen from the above implementation that, in a possible implementation, the path-loss reference signal of the data channel can be determined directly according to the value of the TCI state parameter, and specifically, an association can be established with the power control parameter according to the value of the TCI state parameter, and then the path-loss reference signal corresponding to the second target parameter corresponding to the associated power control parameter can be taken as the path-loss reference signal of the data channel. The associated power control parameter and the corresponding second target parameter can be flexibly selected according to the actual situation. In an example, the power control parameter associated according to the value of the TCI state parameter can be a parameter sri-PUSCH-PowerControlId, and the second target parameter corresponding to the associated power control parameter can be a parameter PUSCH-PathlossReferenceRS-Id included in a parameter SRI-PUSCH-PowerControl associated with the parameter sri-PUSCH-PowerControlId. That is to say, in an example, corresponding association can be established with the power control parameter sri-PUSCH-PowerControlId according to the value of the TCI status parameter, and then a reference signal corresponding to the parameter PUSCH-PathlossReferenceRS-Id included in the parameter SRI-PUSCH-PowerControl associated with the parameter sri-PUSCH-PowerControlId is taken as the fifth reference signal.

In a possible implementation, operations at block S1222 may also include the following. Take the fifth reference signal as the path-loss reference signal of the data channel, in response to the type of the QCL-TypeD reference signal corresponding to the TCI state parameter being a channel sounding reference signal (SRS). Or, take the second reference signal as the path-loss reference signal of the data channel.

It can be seen from the above implementation that in a possible implementation, the path-loss reference signal of the data channel can also be flexibly determined according to the type of the QCL-TypeD reference signal corresponding to the TCI state parameter. As described above, in response to the type of the QCL-TypeD reference signal corresponding to the TCI state parameter being the channel SRS, the fifth reference signal can be taken as the path-loss reference signal of the data channel, or the second reference signal proposed in the above-mentioned implementations can be taken as the path-loss reference signal, which can be flexibly selected according to the actual situation specifically.

In a possible implementation, operations at block S1222 may also include the following. Take The QCL-TypeD reference signal corresponding to the TCI state parameter as the path-loss reference signal of the data channel in response to the type of the QCL-TypeD reference signal corresponding to the TCI state parameter being a downlink (DL) reference signal (RS).

It can be seen from the above implementation that in a possible implementation, in response to the type of the QCL-TypeD reference signal corresponding to the TCI state parameter being the downlink reference signal, the QCL-TypeD reference signal can be directly taken as the path-loss reference signal of the data channel.

In a possible implementation, operations at block S1222 may also include the following. Determine whether a QCL-TypeD reference signal contained in a TCI state of a CORESET is a downlink reference signal to obtain a fifth determination result, in response to the type of the QCL-TypeD reference signal corresponding to the TCI state parameter being the CORESET. Take the QCL-TypeD reference signal contained in the TCI state of the CORESET as the path-loss reference signal of the data channel, in response to the fifth determination result being yes. Take the second reference signal or the fifth reference signal as the path-loss reference signal of the data channel in response to the fifth determination result being no.

It can be seen from the above implementation that in a possible implementation, in response to the type of the QCL-TypeD reference signal corresponding to the TCI state parameter being the CORESET, the path-loss reference signal of the data channel can be flexibly determined according to the type of the QCL-TypeD reference signal contained in the TCI state included in the CORESET. If the QCL-TypeD reference signal contained in the TCI state included in the CORSET is a downlink reference signal, the downlink reference signal can be directly taken as the path-loss reference signal of the data channel; otherwise, the second reference signal or the fifth reference signal mentioned in the above-mentioned implementation can be taken as the path-loss reference signal of the data channel.

In a possible implementation, operations at block S1222 may also include the following. Determine whether a reference signal corresponding to spatial information of a PUCCH or a QCL-TypeD reference signal contained in a TCI state is a downlink reference signal to obtain a sixth determination result, in response to the type of the QCL-TypeD reference signal corresponding to the TCI state parameter being the PUCCH. Take the reference signal corresponding to the spatial information of the PUCCH or the QCL-TypeD reference signal contained in the TCI state as the path-loss reference signal of the data channel in response to the sixth determination result being yes. Take the second reference signal or the fifth reference signal as the path-loss reference signal of the data channel in response to the sixth determination result being no.

It can be seen from the above implementation that in a possible implementation, in response to the type of the QCL-TypeD reference signal corresponding to the TCI state parameter being PUCCH, the path-loss reference signal of the data channel can be flexibly determined according to the type of the reference signal corresponding to the spatial information of the PUCCH or the QCL-TypeD reference signal contained in the TCI state included in the PUCCH. If the reference signal corresponding to the spatial information of the PUCCH or the QCL-TypeD reference signal contained in the TCI state included in the PUCCH is the downlink reference signal, the downlink reference signal can be directly taken as the path-loss reference signal of the data channel; otherwise, the second reference signal or the fifth reference signal mentioned in the above-mentioned implementation can be taken as the path-loss reference signal of the data channel.

With the above implementations, it can be seen that in response to the format of the DCI being DCI 0_1, different determination manners can be flexibly selected to determine the path-loss reference signal of the data channel according to different types of the QCL-TypeD reference signal corresponding to the TCI state parameter.

It should be noted that, in response to the format of the DCI being DCI 0_1, various determination manners for the path-loss reference signal realized under different determination conditions mentioned in the above-mentioned implementation can be flexibly combined according to the actual situation, which is not limited in this implementation. Further, various determination manners of the path-loss reference signal under DCI 0_0 and various determination manners of the path-loss reference signals included under DCI 0_1 can also be flexibly combined with each other, which is not limited in the implementations of this disclosure.

FIG. 2 is a block diagram of a device for determining a path-loss reference signal according to an implementation of the present disclosure. As illustrated in FIG. 2, the device 20 includes an obtaining module 21 and a determining module 22.

The obtaining module 21 is configured to obtain downlink control information (DCI) for scheduling a data channel.

The determining module 22 is configured to determine a path-loss reference signal of the data channel according to a format of the DCI in combination with a type of a reference signal associated with the data channel or a transmission configuration indicator (TCI) state parameter of the data channel.

In a possible implementation, the determining module includes a first determining unit or a second determining unit.

The first determining unit is configured to determine the path-loss reference signal of the data channel according to the type of the reference signal associated with the data channel in response to the format of the DCI including DCI 0_0; or the second determining unit is configured to determine the path-loss reference signal of the data channel according to the TCI state parameter of the data channel in response to the format of the DCI including DCI 0_1.

In a possible implementation, the first determining unit is configured to: determine a configuration state of a physical uplink control channel (PUCCH) resource of an associated bandwidth part (BWP) of the data channel, the associated BWP including an active BWP of a cell, a carrier, or a carrier group to which the data channel belongs; determine the path-loss reference signal of the data channel according to a type of a first reference signal associated with the data channel in response to the associated BWP being not configured with the PUCCH resource, where the first reference signal includes a QCL-TypeD reference signal contained in a TCI state corresponding to a first control resource set (CORESET), and the first CORESET includes a CORESET with a lowest ID configured on the associated BWP or a CORESET with a lowest ID configured on the associated BWP and associated with a search space monitored in a latest slot, in response to the associated BWP being not configured with the PUCCH resource; or determine the path-loss reference signal of the data channel according to the PUCCH resource in response to the associated BWP being configured with the PUCCH resource and the PUCCH resource being not configured with spatial information or a QCL-TypeD reference signal; or determine the path-loss reference signal of the data channel according to a type of a reference signal corresponding to spatial information or a type of a QCL-TypeD reference signal included in the PUCCH resource, in response to the associated BWP being configured with the PUCCH resource and at least one of the PUCCH resource being configured with the spatial information or the QCL-TypeD reference signal.

In a possible implementation, the first determining unit is further configured to: determine whether the type of the first reference signal is a downlink reference signal or a downlink channel to obtain a first determination result, in response to the associated BWP being not configured with the PUCCH resource; take the first reference signal as the path-loss reference signal of the data channel in response to the first determination result being yes; and take a second reference signal as the path-loss reference signal of the data channel in response to the first determination result being no, where the second reference signal includes a path-loss reference signal corresponding to a first target parameter included in power control parameters of the data channel.

In a possible implementation, the first determining unit is further configured to: determine whether the associated BWP is configured with a CORESET to obtain a second determination result, in response to the associated BWP being configured with the PUCCH resource and the PUCCH resource being not configured with the spatial information or the QCL-TypeD reference signal; determine the path-loss reference signal of the data channel according to a type of a third reference signal or a type of a fourth reference signal associated with the data channel in response to the second determination result being yes, where the third reference signal includes a QCL-TypeD reference signal contained in a TCI state corresponding to a second CORESET, and the second CORESET includes a CORESET with a lowest ID configured on the associated BWP or a CORESET with a lowest ID configured on the associated BWP and associated with a search space monitored in a latest slot, in response to the associated BWP being configured with the PUCCH resource, and the fourth reference signal includes a QCL-TypeD reference signal contained in an active TCI state with a lowest ID associated with the data channel; and determine the path-loss reference signal of the data channel according to the type of the fourth reference signal associated with the data channel in response to the second determination result being no.

In a possible implementation, the first determining unit is further configured to: determine whether the type of the third reference signal is a downlink reference signal or a downlink channel to obtain a third determination result, in response to the second determination result being yes; take the third reference signal as the path-loss reference signal of the data channel in response to the third determination result being yes; and take the second reference signal as the path-loss reference signal of the data channel in response to the third determination result being no, or determine the path-loss reference signal of the data channel according to the type of the fourth reference signal in response to the third determination result being no.

In a possible implementation, the first determining unit is further configured to: determine the type of the fourth reference signal in response to the third determination result being no; take the fourth reference signal as the path-loss reference signal of the data channel in response to the type of the fourth reference signal including a downlink reference signal or a downlink channel; and take the second reference signal as the path-loss reference signal of the data channel in response to the type of the fourth reference signal including an uplink reference signal or an uplink channel.

In a possible implementation, the first determining unit is further configured to: determine the type of the fourth reference signal in response to the second determination result being no; take the fourth reference signal as the path-loss reference signal of the data channel in response to the type of the fourth reference signal including a downlink reference signal or a downlink channel; and take the second reference signal as the path-loss reference signal of the data channel in response to the type of the fourth reference signal including an uplink reference signal or an uplink channel.

In a possible implementation, the first determining unit is further configured to: select a PUCCH resource with a lowest ID from the PUCCH resource configured with the space information or the QCL-TypeD reference signal as a PUCCH resource to-be-determined, in response to the associated BWP being configured with the PUCCH resource and at least one of the PUCCH resource being configured with the spatial information or the QCL-TypeD reference signal; determine whether a type of a reference signal corresponding to spatial information or a type of a QCL-TypeD reference signal included in the PUCCH resource to-be-determined is a downlink reference signal or a downlink channel, to obtain a fourth determination result; take the reference signal corresponding to the spatial information or the QCL-TypeD reference signal included in the PUCCH resource to-be-determined as the path-loss reference signal of the data channel, in response to the fourth determination result being yes; and take the second reference signal as the path-loss reference signal of the data channel in response to the fourth determination result being no.

In a possible implementation, the second determining unit is configured to: obtain a TCI state parameter contained in the DCI in response to the format of the DCI including DCI 0_1; and determine the path-loss reference signal of the data channel according to a power control parameter corresponding to the TCI state parameter or a type of a QCL-TypeD reference signal corresponding to the TCI state parameter.

In a possible implementation, the second determining unit is further configured to: take a fifth reference signal as the path-loss reference signal of the data channel, where the fifth reference signal includes a path-loss reference signal corresponding to a second target parameter corresponding to the power control parameter after the power control parameter is associated according to a value of the TCI state parameter.

In a possible implementation, the second determining unit is further configured to: take the fifth reference signal as the path-loss reference signal of the data channel, in response to the type of the QCL-TypeD reference signal corresponding to the TCI state parameter being a channel sounding reference signal (SRS), or take the second reference signal as the path-loss reference signal of the data channel.

In a possible implementation, the second determining unit is further configured to: take the QCL-TypeD reference signal corresponding to the TCI state parameter as the path-loss reference signal of the data channel in response to the type of the QCL-TypeD reference signal corresponding to the TCI state parameter being a downlink (DL) reference signal (RS).

In a possible implementation, the second determining unit is further configured to: determine whether a QCL-TypeD reference signal contained in a TCI state of a CORESET is a downlink reference signal to obtain a fifth determination result, in response to the type of the QCL-TypeD reference signal corresponding to the TCI state parameter being the CORESET; take the QCL-TypeD reference signal contained in the TCI state of the CORESET as the path-loss reference signal of the data channel, in response to the fifth determination result being yes; and take the second reference signal or the fifth reference signal as the path-loss reference signal of the data channel in response to the fifth determination result being no.

In a possible implementation, the second determining unit is further configured to: determine whether a reference signal corresponding to spatial information of a PUCCH or a QCL-TypeD reference signal contained in a TCI state is a downlink reference signal to obtain a sixth determination result, in response to the type of the QCL-TypeD reference signal corresponding to the TCI state parameter being the PUCCH; take the reference signal corresponding to the spatial information of the PUCCH or the QCL-TypeD reference signal contained in the TCI state as the path-loss reference signal of the data channel in response to the sixth determination result being yes; and take the second reference signal or the fifth reference signal as the path-loss reference signal of the data channel in response to the sixth determination result being no.

In a possible implementation, the device for determining the path-loss reference signal may be a chip, a chip module, a processor inside a chip, a terminal including the chip, etc. Various modules/units included in various devices and products described in the above implementations may be software modules/units or hardware modules/units, or may be partially software modules/units and partially hardware modules/units. For example, for various devices and products applied to or integrated into a chip, various modules/units included therein can be implemented by hardware such as circuits, or at least part of the modules/units can be implemented by software programs which run on a processor integrated in the chip, and the remaining (if any) part of the modules/units can be implemented by hardware such as circuits. For various devices and products applied to or integrated into a chip module, various modules/units included therein can be implemented by hardware such as circuits and different modules/units can be located in the same component (such as a chip, a circuit module, etc.) or different components of the chip module, at least part of the modules/units can be implemented by software programs which run on a processor integrated in the chip module, and the remaining (if any) part of the modules/units can be implemented by hardware such as circuits. For various devices and products applied to or integrated into a terminal, various modules/units included therein can be implemented by hardware such as circuits and different modules/units can be located in the same component (such as a chip, a circuit module, etc.) or different components of the terminal, at least part of the modules/units can be implemented by software programs which run on a processor integrated in the terminal, and the remaining (if any) part of the modules/units can be implemented by hardware such as circuits.

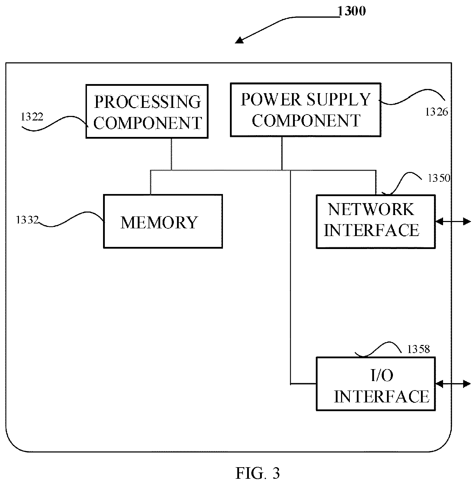

FIG. 3 is a block diagram of a codebook determination device according to an implementation of the disclosure. For example, the device 1300 can be provided as a server. Referring to FIG. 3, the device 1300 includes a processing component 1322, which further includes one or more processors as well as memory resources represented by a memory 1332 and configured to store instructions (such as applications) executable with the processing component 1322. The application stored in the memory 1332 may include one or more modules, each corresponding to a set of instructions. In addition, the applications stored in the processing component 1322 is configured to carry out instructions to perform the above methods.

The device 1300 may further include a power supply component 1326 configured to perform power management of the device 1300, a wired or wireless network interface 1350 configured to connect the device 1300 to the network, and an I/O interface 1358. The device 1300 may operate an operating system stored in the memory 1332, such as Windows Server^{™}, Mac OS X^{™}, Unix^{™}, Linux^{™}, FreeBSD^{™}, etc.

In an exemplary implementation, a non-transitory computer readable storage medium is provided, such as the memory 1332 storing computer program instructions. The computer program instructions can be carried out by the processing component 1322 of the device 1300 to perform the above methods.

This disclosure can be a system, a method, and/or a computer program product. The computer program product includes a computer readable storage medium, which carries computer readable program instructions for a processor to implement various aspects of the disclosure.

The computer-readable storage medium may be a tangible device that can hold and store instructions used by an instruction execution device. The computer-readable storage medium may be, for example, but is not limited to, an electrical storage device, a magnetic storage device, an optical storage device, an electromagnetic storage device, a semiconductor storage device, or any suitable combination of the above. More specific examples (non-exhaustive list) of a computer-readable storage medium include: portable computer disk, hard disk, random access memory (RAM), read only memory (ROM), erasable programmable ROM (EPROM or flash memory), static RAM (SRAM), portable compact disk ROM (CD-ROM), digital multifunction disk (DVD), a memory stick, a floppy disk, a mechanical encoding device, such as a punch card or a convex structure in a groove on which instructions are stored, and any suitable combination of the above. The computer-readable storage medium used herein is not interpreted as an instantaneous signal itself, such as a radio wave or other freely propagating electromagnetic wave, an electromagnetic wave propagating through a waveguide or other transmission medium (for example, an optical pulse through an optical fiber cable), or an electrical signal transmitted through a wire.

The computer-readable program instructions described herein may be downloaded from a computer-readable storage medium to various computing/processing devices, or to an external computer or external storage device through a network, such as the Internet, a local area network (LAN), a wide area network (WAN), and/or a wireless network. The network may include copper transmission cables, optical fiber transmission, wireless transmission, routers, firewalls, switches, gateway computers, and/or edge servers. The network adapter card or network interface in each computing/processing device receives computer-readable program instructions from the network and forwards the computer-readable program instructions to be stored in the computer-readable storage medium in each computing/processing device.

The computer program instructions for performing the operations of the disclosure may be assembly instructions, instruction set architecture (ISA) instructions, machine instructions, machine related instructions, microcode, firmware instructions, status setting data, or source code or object code written in any combination of one or more programming languages. The programming languages include objectoriented programming languages such as Smalltalk, C++, etc., and conventional procedural programming languages such as "C" language or similar programming languages. Computer readable program instructions may be executed completely on a user's computer, partially on the user's computer, as a separate software package, partially on the user's computer and partially on a remote computer, or completely on the remote computer or server. In the case of the remote computer, the remote computer may be connected to the user computer through any kind of network, including a LAN or a WAN, or may be connected to an external computer (for example, connected through an Internet via an Internet service provider). In some implementations, an electronic circuit such as a programmable logic circuit, a field programmable gate array (FPGA), or a programmable logic array (PLA) can be personalized by utilizing the state information of computer-readable program instructions. The electronic circuit can carry out computer readable program instructions, so as to implement various aspects of the disclosure.

Various aspects of the disclosure are described herein with reference to flowcharts and/or block diagrams of methods, devices (systems) and computer program products according to implementations of the disclosure. It should be understood that each block of a flowchart and/or block diagram and a combination of blocks in the flowchart and/or block diagram may be implemented by computer-readable program instructions.

These computer-readable program instructions can be provided to a processor of a generalpurpose computer, a special-purpose computer, or other programmable data processing devices, so as to produce a machine so that when these instructions are executed by a processor of a computer or other programmable data processing devices, a device is generated to realize the functions/actions specified in one or more blocks in the flowchart and/or block diagram. These computer-readable program instructions may also be stored in a computer-readable storage medium, to cause computers, programmable data processing devices, and/or other devices to operate in a specific manner, so that the computer-readable medium in which the instructions are stored includes a manufacture which includes instructions to implement various aspects of the functions/actions specified in one or more blocks in the flowchart and/or block diagram.

Computer readable program instructions may also be loaded onto a computer, other programmable data processing devices, or other devices, so that a series of operation steps are performed on the computer, other programmable data processing device, or other devices to generate a computer implemented process, so that instructions executed in the computer, other programmable data processing device, or other devices can realize the functions/actions specified in one or more blocks in the flowchart and/or block diagram.

The flowchart and block diagram in the accompanying drawings show the architecture, functions and operations of possible implementations of systems, methods and computer program products according to various implementations of the disclosure. In this regard, each block in the flowchart or block diagram may represent a part of a module, program segment, or instruction containing one or more executable instructions for realizing a specified logical function. In some alternative implementations, the functions marked in the blocks may also occur in a different order than those marked in the drawings. For example, two consecutive blocks can actually be executed basically in parallel, and they sometimes can be executed in the opposite order, depending on the function involved. It should also be noted that each block in the block diagram and/or flowchart and the combination of blocks in the block diagram and/or flowchart can be realized by a dedicated hardware based system performing specified functions or actions, or by a combination of dedicated hardware and computer instructions.

Various implementations of the present disclosure have been described above, and the above description is exemplary rather than exhaustive, and is not limited to the various implementations disclosed. Without departing from the scope and spirit of the various implementations described, many modifications and changes are obvious to those skilled in the art. The terms used herein are selected to best explain the principle, practical application, or improvement of the technology in the market of each implementation, or to enable other ordinary skilled person in the art to understand the various implementations disclosed herein.

Various implementations of the present disclosure have been described above, and the above description is exemplary rather than exhaustive, and is not limited to the various implementations disclosed. Without departing from the scope and spirit of the various implementations described, many modifications and changes are obvious to those skilled in the art. The terms used herein are selected to best explain the principle, practical application, or improvement of the technology in the market of each implementation, or to enable other ordinary skilled person in the art to understand the various implementations disclosed herein.

## Claims

1. A method for determining a path-loss reference signal, comprising:
obtaining downlink control information (DCI) for scheduling a data channel; and
determining a path-loss reference signal of the data channel according to a format of the DCI in combination with a type of a reference signal associated with the data channel or a transmission configuration indicator (TCI) state parameter of the data channel.

2. The method according to claim 1, wherein determining the path-loss reference signal of the data channel according to the format of the DCI comprises:
determining the path-loss reference signal of the data channel according to the type of the reference signal associated with the data channel in response to the format of the DCI comprising DCI 0 0; or
determining the path-loss reference signal of the data channel according to the TCI state parameter of the data channel in response to the format of the DCI comprising DCI 0_1.

3. The method according to claim 2, wherein determining the path-loss reference signal of the data channel according to the type of the reference signal associated with the data channel in response to the format of the DCI comprising DCI 0_0 comprises:
determining a configuration state of a physical uplink control channel (PUCCH) resource of an associated bandwidth part (BWP) of the data channel, the associated BWP comprising an active BWP of a cell, a carrier, or a carrier group to which the data channel belongs;
determining the path-loss reference signal of the data channel according to a type of a first reference signal associated with the data channel in response to the associated BWP being not configured with the PUCCH resource, wherein the first reference signal comprises a QCL-TypeD reference signal contained in a TCI state corresponding to a first control resource set (CORESET), and the first CORESET comprises a CORESET with a lowest ID configured on the associated BWP or a CORESET with a lowest ID configured on the associated BWP and associated with a search space monitored in a latest slot, in response to the associated BWP being not configured with the PUCCH resource; or
determining the path-loss reference signal of the data channel according to the PUCCH resource in response to the associated BWP being configured with the PUCCH resource and the PUCCH resource being not configured with spatial information or a QCL-TypeD reference signal; or
determining the path-loss reference signal of the data channel according to a type of a reference signal corresponding to spatial information or a type of a QCL-TypeD reference signal comprised in the PUCCH resource, in response to the associated BWP being configured with the PUCCH resource and at least one of the PUCCH resource being configured with the spatial information or the QCL-TypeD reference signal.

4. The method according to claim 3, wherein determining the path-loss reference signal of the data channel according to the type of the first reference signal associated with the data channel in response to the associated BWP being not configured with PUCCH resource comprises:
determining whether the type of the first reference signal is a downlink reference signal or a downlink channel to obtain a first determination result, in response to the associated BWP being not configured with the PUCCH resource;
taking the first reference signal as the path-loss reference signal of the data channel in response to the first determination result being yes; and
taking a second reference signal as the path-loss reference signal of the data channel in response to the first determination result being no, wherein the second reference signal comprises a path-loss reference signal corresponding to a first target parameter comprised in power control parameters of the data channel.

5. The method according to claim 3, wherein determining the path-loss reference signal of the data channel according to the PUCCH resource in response to the associated BWP being configured with the PUCCH resource and the PUCCH resource being not configured with the spatial information or the QCL-TypeD reference signal comprises:
determining whether the associated BWP is configured with a CORESET to obtain a second determination result, in response to the associated BWP being configured with the PUCCH resource and the PUCCH resource being not configured with the spatial information or the QCL-TypeD reference signal;
determining the path-loss reference signal of the data channel according to a type of a third reference signal or a type of a fourth reference signal associated with the data channel in response to the second determination result being yes, wherein the third reference signal comprises a QCL-TypeD reference signal contained in a TCI state corresponding to a second CORESET, and the second CORESET comprises a CORESET with a lowest ID configured on the associated BWP or a CORESET with a lowest ID configured on the associated BWP and associated with a search space monitored in a latest slot, in response to the associated BWP being configured with the PUCCH resource, and the fourth reference signal comprises a QCL-TypeD reference signal contained in an active TCI state with a lowest ID associated with the data channel; and
determining the path-loss reference signal of the data channel according to the type of the fourth reference signal associated with the data channel in response to the second determination result being no.

6. The method according to claim 5, wherein determining the path-loss reference signal of the data channel according to the type of the third reference signal associated with the second CORESET or the type of the fourth reference signal associated with the data channel in response to the second determination result being yes comprises:
determining whether the type of the third reference signal is a downlink reference signal or a downlink channel to obtain a third determination result, in response to the second determination result being yes;
taking the third reference signal as the path-loss reference signal of the data channel in response to the third determination result being yes; and
taking the second reference signal as the path-loss reference signal of the data channel in response to the third determination result being no, or
determining the path-loss reference signal of the data channel according to the type of the fourth reference signal in response to the third determination result being no.

7. The method according to claim 5, wherein determining the path-loss reference signal of the data channel according to the type of the fourth reference signal in response to the third determination result being no comprises:
determining the type of the fourth reference signal in response to the third determination result being no;
taking the fourth reference signal as the path-loss reference signal of the data channel in response to the type of the fourth reference signal comprising a downlink reference signal or a downlink channel; and
taking the second reference signal as the path-loss reference signal of the data channel in response to the type of the fourth reference signal comprising an uplink reference signal or an uplink channel.

8. The method according to claim 5, wherein determining the path-loss reference signal of the data channel according to the type of the fourth reference signal associated with the data channel in response to the second determination result being no comprises:
determining the type of the fourth reference signal in response to the second determination result being no;
taking the fourth reference signal as the path-loss reference signal of the data channel in response to the type of the fourth reference signal comprising a downlink reference signal or a downlink channel; and
taking the second reference signal as the path-loss reference signal of the data channel in response to the type of the fourth reference signal comprising an uplink reference signal or an uplink channel.

9. The method according to claim 3, wherein determining the path-loss reference signal of the data channel according to the type of the reference signal corresponding to the spatial information or the type of the QCL-TypeD reference signal comprised in the PUCCH resource, in response to the associated BWP being configured with the PUCCH resource and at least one of the PUCCH resource being configured with the spatial information or the QCL-TypeD reference signal comprises:
selecting a PUCCH resource with a lowest ID from the PUCCH resource configured with the space information or the QCL-TypeD reference signal as a PUCCH resource to-be-determined, in response to the associated BWP being configured with the PUCCH resource and at least one of the PUCCH resource being configured with the spatial information or the QCL-TypeD reference signal;
determining whether a type of a reference signal corresponding to spatial information or a type of a QCL-TypeD reference signal comprised in the PUCCH resource to-be-determined is a downlink reference signal or a downlink channel, to obtain a fourth determination result;
taking the reference signal corresponding to the spatial information or the QCL-TypeD reference signal comprised in the PUCCH resource to-be-determined as the path-loss reference signal of the data channel, in response to the fourth determination result being yes; and
taking the second reference signal as the path-loss reference signal of the data channel in response to the fourth determination result being no.

10. The method according to any of claims 4 to 9, wherein determining the path-loss reference signal of the data channel according to the TCI state parameter of the data channel in response to the format of the DCI comprising DCI 0_1 comprises:
obtaining a TCI state parameter contained in the DCI in response to the format of the DCI comprising DCI 0_1; and
determining the path-loss reference signal of the data channel according to a power control parameter corresponding to the TCI state parameter or a type of a QCL-TypeD reference signal corresponding to the TCI state parameter.

11. The method according to claim 10, wherein determining the path-loss reference signal of the data channel according to the power control parameter corresponding to the TCI state parameter or the type of the QCL-TypeD reference signal corresponding to the TCI state parameter comprises:
taking a fifth reference signal as the path-loss reference signal of the data channel, wherein the fifth reference signal comprises a path-loss reference signal corresponding to a second target parameter corresponding to the power control parameter after the power control parameter is associated according to the value of the TCI state parameter.

12. The method according to claim 11, wherein determining the path-loss reference signal of the data channel according to the power control parameter corresponding to the TCI state parameter or the type of the QCL-TypeD reference signal corresponding to the TCI state parameter comprises:
taking the fifth reference signal as the path-loss reference signal of the data channel, in response to the type of the QCL-TypeD reference signal corresponding to the TCI state parameter being a channel sounding reference signal (SRS), or
taking the second reference signal as the path-loss reference signal of the data channel.

13. The method according to claim 10, wherein determining the path-loss reference signal of the data channel according to the power control parameter corresponding to the TCI state parameter or the type of the QCL-TypeD reference signal corresponding to the TCI state parameter comprises:
taking the QCL-TypeD reference signal corresponding to the TCI state parameter as the path-loss reference signal of the data channel in response to the type of the QCL-TypeD reference signal corresponding to the TCI state parameter being a downlink (DL) reference signal (RS).

14. The method according to claim 11, wherein determining the path-loss reference signal of the data channel according to the power control parameter corresponding to the TCI state parameter or the type of the QCL-TypeD reference signal corresponding to the TCI state parameter comprises:
determining whether a QCL-TypeD reference signal contained in a TCI state of a CORESET is a downlink reference signal to obtain a fifth determination result, in response to the type of the QCL-TypeD reference signal corresponding to the TCI state parameter being the CORESET;
taking the QCL-TypeD reference signal contained in the TCI state of the CORESET as the path-loss reference signal of the data channel, in response to the fifth determination result being yes; and
taking the second reference signal or the fifth reference signal as the path-loss reference signal of the data channel in response to the fifth determination result being no.

15. The method according to claim 11, wherein determining the path-loss reference signal of the data channel according to the power control parameter corresponding to the TCI state parameter or the type of the QCL-TypeD reference signal corresponding to the TCI state parameter comprises:
determining whether a reference signal corresponding to spatial information of a PUCCH or a QCL-TypeD reference signal contained in a TCI state is a downlink reference signal to obtain a sixth determination result, in response to the type of the QCL-TypeD reference signal corresponding to the TCI state parameter being the PUCCH;
taking the reference signal corresponding to the spatial information of the PUCCH or the QCL-TypeD reference signal contained in the TCI state as the path-loss reference signal of the data channel in response to the sixth determination result being yes; and
taking the second reference signal or the fifth reference signal as the path-loss reference signal of the data channel in response to the sixth determination result being no.

16. A device for determining a path-loss reference signal, comprising:
an obtaining module, configured to obtain downlink control information (DCI) for scheduling a data channel; and
a determining module, configured to determine a path-loss reference signal of the data channel according to a format of the DCI in combination with a type of a reference signal associated with the data channel or a transmission configuration indicator (TCI) state parameter of the data channel.

17. The device according to claim 16, wherein the determining module comprises:
a first determining unit, configured to determine the path-loss reference signal of the data channel according to the type of the reference signal associated with the data channel in response to the format of the DCI comprising DCI 0 0; or
a second determining unit, configured to determine the path-loss reference signal of the data channel according to the TCI state parameter of the data channel in response to the format of the DCI comprising DCI 0_1.

18. The device according to claim 17, wherein the first determining unit is configured to:
determine a configuration state of a physical uplink control channel (PUCCH) resource of an associated bandwidth part (BWP) of the data channel, the associated BWP comprising an active BWP of a cell, a carrier, or a carrier group to which the data channel belongs;
determine the path-loss reference signal of the data channel according to a type of a first reference signal associated with the data channel in response to the associated BWP being not configured with the PUCCH resource, wherein the first reference signal comprises a QCL-TypeD reference signal contained in a TCI state corresponding to a first control resource set (CORESET), and the first CORESET comprises a CORESET with a lowest ID configured on the associated BWP or a CORESET with a lowest ID configured on the associated BWP and associated with a search space monitored in a latest slot, in response to the associated BWP being not configured with the PUCCH resource; or
determine the path-loss reference signal of the data channel according to the PUCCH resource in response to the associated BWP being configured with the PUCCH resource and the PUCCH resource being not configured with spatial information or a QCL-TypeD reference signal; or
determine the path-loss reference signal of the data channel according to a type of a reference signal corresponding to spatial information or a type of a QCL-TypeD reference signal comprised in the PUCCH resource, in response to the associated BWP being configured with the PUCCH resource and at least one of the PUCCH resource being configured with the spatial information or the QCL-TypeD reference signal.

19. The device according to claim 18, wherein the first determining unit is further configured to:
determine whether the type of the first reference signal is a downlink reference signal or a downlink channel to obtain a first determination result, in response to the associated BWP being not configured with the PUCCH resource;
take the first reference signal as the path-loss reference signal of the data channel in response to the first determination result being yes; and
take a second reference signal as the path-loss reference signal of the data channel in response to the first determination result being no, wherein the second reference signal comprises a path-loss reference signal corresponding to a first target parameter comprised in power control parameters of the data channel.

20. The device according to claim 18, wherein the first determining unit is further configured to:
determine whether the associated BWP is configured with a CORESET to obtain a second determination result, in response to the associated BWP being configured with the PUCCH resource and the PUCCH resource being not configured with the spatial information or the QCL-TypeD reference signal;
determine the path-loss reference signal of the data channel according to a type of a third reference signal or a type of a fourth reference signal associated with the data channel in response to the second determination result being yes, wherein the third reference signal comprises a QCL-TypeD reference signal contained in a TCI state corresponding to a second CORESET, and the second CORESET comprises a CORESET with a lowest ID configured on the associated BWP or a CORESET with a lowest ID configured on the associated BWP and associated with a search space monitored in a latest slot, in response to the associated BWP being configured with the PUCCH resource, and the fourth reference signal comprises a QCL-TypeD reference signal contained in an active TCI state with a lowest ID associated with the data channel; and
determine the path-loss reference signal of the data channel according to the type of the fourth reference signal associated with the data channel in response to the second determination result being no.

21. The device according to claim 20, wherein the first determining unit is further configured to:
determine whether the type of the third reference signal is a downlink reference signal or a downlink channel to obtain a third determination result, in response to the second determination result being yes;
take the third reference signal as the path-loss reference signal of the data channel in response to the third determination result being yes; and
take the second reference signal as the path-loss reference signal of the data channel in response to the third determination result being no, or
determine the path-loss reference signal of the data channel according to the type of the fourth reference signal in response to the third determination result being no.

22. The device according to claim 20, wherein the first determining unit is further configured to:
determine the type of the fourth reference signal in response to the third determination result being no;
take the fourth reference signal as the path-loss reference signal of the data channel in response to the type of the fourth reference signal comprising a downlink reference signal or a downlink channel; and
take the second reference signal as the path-loss reference signal of the data channel in response to the type of the fourth reference signal comprising an uplink reference signal or an uplink channel.

23. The device according to claim 20, wherein the first determining unit is further configured to:
determine the type of the fourth reference signal in response to the second determination result being no;
take the fourth reference signal as the path-loss reference signal of the data channel in response to the type of the fourth reference signal comprising a downlink reference signal or a downlink channel; and
take the second reference signal as the path-loss reference signal of the data channel in response to the type of the fourth reference signal comprising an uplink reference signal or an uplink channel.

24. The device according to claim 3, wherein the first determining unit is further configured to:
select a PUCCH resource with a lowest ID from the PUCCH resource configured with the space information or the QCL-TypeD reference signal as a PUCCH resource to-be-determined, in response to the associated BWP being configured with the PUCCH resource and at least one of the PUCCH resource being configured with the spatial information or the QCL-TypeD reference signal;
determine whether a type of a reference signal corresponding to spatial information or a type of a QCL-TypeD reference signal comprised in the PUCCH resource to-be-determined is a downlink reference signal or a downlink channel, to obtain a fourth determination result;
take the reference signal corresponding to the spatial information or the QCL-TypeD reference signal comprised in the PUCCH resource to-be-determined as the path-loss reference signal of the data channel, in response to the fourth determination result being yes; and
take the second reference signal as the path-loss reference signal of the data channel in response to the fourth determination result being no.

25. The device according to any of claims 19 to 24, wherein the second determining unit is configured to:
obtain a TCI state parameter contained in the DCI in response to the format of the DCI comprising DCI 0_1; and
determine the path-loss reference signal of the data channel according to a power control parameter corresponding to the TCI state parameter or a type of a QCL-TypeD reference signal corresponding to the TCI state parameter.

26. The device according to claim 25, wherein the second determining unit is further configured to: take a fifth reference signal as the path-loss reference signal of the data channel, wherein the fifth reference signal comprises a path-loss reference signal corresponding to a second target parameter corresponding to the power control parameter after the power control parameter is associated according to a value of the TCI state parameter.

27. The device according to claim 26, wherein the second determining unit is further configured to:
take the fifth reference signal as the path-loss reference signal of the data channel, in response to the type of the QCL-TypeD reference signal corresponding to the TCI state parameter being a channel sounding reference signal (SRS), or
take the second reference signal as the path-loss reference signal of the data channel.

28. The device according to claim 10, wherein the second determining unit is further configured to:
take the QCL-TypeD reference signal corresponding to the TCI state parameter as the path-loss reference signal of the data channel in response to the type of the QCL-TypeD reference signal corresponding to the TCI state parameter being a downlink (DL) reference signal (RS).

29. The device according to claim 11, wherein the second determining unit is further configured to:
determine whether a QCL-TypeD reference signal contained in a TCI state of a CORESET is a downlink reference signal to obtain a fifth determination result, in response to the type of the QCL-TypeD reference signal corresponding to the TCI state parameter being the CORESET;
take the QCL-TypeD reference signal contained in the TCI state of the CORESET as the path-loss reference signal of the data channel, in response to the fifth determination result being yes; and
take the second reference signal or the fifth reference signal as the path-loss reference signal of the data channel in response to the fifth determination result being no.

30. The device according to claim 11, wherein the second determining unit is further configured to:
determine whether a reference signal corresponding to spatial information of a PUCCH or a QCL-TypeD reference signal contained in a TCI state is a downlink reference signal to obtain a sixth determination result, in response to the type of the QCL-TypeD reference signal corresponding to the TCI state parameter being the PUCCH;
take the reference signal corresponding to the spatial information of the PUCCH or the QCL-TypeD reference signal contained in the TCI state as the path-loss reference signal of the data channel in response to the sixth determination result being yes; and
take the second reference signal or the fifth reference signal as the path-loss reference signal of the data channel in response to the sixth determination result being no.

31. A device for determining a path-loss reference signal, comprising:
a processor configured to implement the method of any of claims 1 to 15; and
a memory configured to store instructions executable by the processor.

32. A non-transitory computer-readable storage medium configured to store computer program instructions which, when executed by a processor, are operable with the processor to implement the method of any of claims 1 to 15.
